# EUROPEAN PATENT APPLICATION

(11) **EP 4 332 640 A1**
(43) Date of publication of application: **06.03.2024**
(21) Application number: 23188930.4
(22) Date of filing: 01.08.2023
(51) Int. Cl.: G02B 1/111, G02B 5/30

(54) **REFLECTIVE POLARIZER WITH INTEGRATED ANTI-REFLECTIVE COATING**

(30) Priority: 29.08.2022 US 202263402034 P; 06.12.2022 US 202218062205
(71) Applicant: Meta Platforms Technologies, LLC, Menlo Park, CA 94025 (US)
(72) Inventor: GAO, Weihua, Menlo Park, 94025 (US); Ye, Sheng, Menlo Park, 94025 (US); GRESPAN, Silvio, Menlo Park, 94025 (US); CHEN, Aiqing, Menlo Park, 94025 (US); HUANG, Rongzhi, Menlo Park, 94025 (US); LIAO, Christopher Tuan Ting, Menlo Park, 94025 (US); OUDERKIRK, Andrew John, Menlo Park, 94025 (US); NIE, Zhaoyu, Menlo Park, 94025 (US); DIAZ, Liliana Ruiz, Menlo Park, 94025 (US)
(74) Representative: Murgitroyd & Company

(57) **Abstract**

A multilayer polymer thin film includes an anti-reflective coating directly overlying a reflective polarizer stack. The reflective polarizer stack includes alternating first and second polymer layers, where the first layers include an isotropic polymer thin film and the second layers include an anisotropic polymer thin film. The anti-reflective coating (ARC) includes alternating third and fourth layers, where the third layers include an isotropic polymer thin film or an anisotropic polymer thin film and the fourth layers include an isotropic polymer thin film. The multilayer polymer thin film may be formed by co-extrusion where the reflective polarizer stack and the anti-reflective coating are formed simultaneously.

## Description

### TECHNICAL FIELD

The present disclosure is directed generally to polymer thin films and polymer multilayers having engineered optical and mechanical properties, and more specifically to extrusion and stretching methods for forming optical quality multilayer polymer thin films.

### BACKGROUND

Polymer materials may be incorporated into a variety of different optic and electro-optic systems, including passive and active optics and electroactive devices. Lightweight and conformable, one or more polymer layers may be incorporated into wearable devices such as smart glasses and are attractive candidates for emerging technologies including virtual reality/augmented reality devices where a comfortable, adjustable form factor is desired.

Virtual reality (VR) and augmented reality (AR) eyewear devices or headsets, for instance, may enable users to experience events, such as interactions with people in a computer-generated simulation of a three-dimensional world or viewing data superimposed on a real-world view. By way of example, superimposing information onto a field of view may be achieved through an optical head-mounted display (OHMD) or by using embedded wireless glasses with a transparent heads-up display (HUD) or augmented reality (AR) overlay. VR/AR eyewear devices and headsets may be used for a variety of purposes. Governments may use such devices for military training, medical professionals may use such devices to simulate surgery, and engineers may use such devices as design visualization aids.

These and other applications may leverage one or more characteristics of polymer materials, including the refractive index to manipulate light, thermal conductivity to manage heat, and mechanical strength and toughness to provide light-weight structural support. In various applications, optical elements and other components may include polymer thin films that have anisotropic mechanical and/or optical properties. The degree of optical or mechanical anisotropy achievable through conventional thin film manufacturing processes is typically limited, however, and is often exchanged for competing thin film properties such as flatness, toughness and/or film strength. For example, highly anisotropic polymer thin films often exhibit low strength in one or more in-plane direction, which may challenge manufacturability and limit performance.

Polymer thin films exhibiting optical anisotropy, for instance, may be incorporated into a variety of systems and devices, including birefringent gratings, reflective polarizers, optical compensators and optical retarders for systems using polarized light such as liquid crystal displays (LCDs). Birefringent gratings may be used as optical combiners in augmented reality displays, for example, and as input and output couplers for waveguides and fiber optic systems. Reflective polarizers may be used in many display-related applications, particularly in pancake optical systems and for brightness enhancement within display systems that use polarized light. For orthogonally polarized light, pancake lenses may use reflective polarizers with extremely high contrast ratios for transmitted light, reflected light, or both transmitted and reflected light.

Notwithstanding recent developments, it would be advantageous to provide optical quality polymer thin films that may be incorporated into various optical systems including display systems for artificial reality applications.

### SUMMARY

According to a first aspect, there is provided a multilayer polymer thin film comprising: a reflective polarizer (RP) comprising alternating first and second layers, wherein the first layers each comprise an isotropic polymer thin film having in-plane refractive indices nx(1) and ny(1) and the second layers each comprise an anisotropic polymer thin film having in-plane refractive indices nx(2) and ny(2); and an anti-reflective coating (ARC) located directly over the reflective polarizer, the anti-reflective coating comprising alternating third and fourth layers, wherein the third layers each comprise an isotropic polymer thin film or an anisotropic polymer thin film having in-plane refractive indices nx(3) and ny(3) and the fourth layers each comprise an isotropic polymer thin film having in-plane refractive indices nx(4) and ny(4).

The multilayer polymer thin film may have an average reflection of less than approximately 1% over a range of 400 nm to 700 nm along a pass direction, and an average reflection of at least approximately 90% over a range of 400 nm to 700 nm along a block direction.

The multilayer polymer thin film may be arranged or configured such that nx(1) < 1.8, ny(1) < 1.8, nx(1)-ny(1) < 0.1, nx(2) > 1.8, and nx(2)-ny(2) > 0.1.

The multilayer polymer thin film may be arranged or configured such that nx(2) > 1.85 and nx(2)-ny(2) > 0.2.

The second layers may comprise a moiety selected from the group consisting of polyethylene naphthalate, polyethylene terephthalate, polybutylene naphthalate, polybutylene terephthalate, polyoxymethylene, and derivatives thereof.

The multilayer polymer thin film may be arranged or configured such that nx(3) > 1.6, ny(3) > 1.6, nx(3)-ny(3) < 0.1, nx(4) < 1.6, ny(4) < 1.6, and nx(4)-ny(4) < 0.1.

The multilayer polymer thin film may be arranged or configured such that ny(3) > 1.6, ny(3) > ny(1), nx(4) < 1.6, ny(4) < 1.6, and nx(4)-ny(4) < 0.1.

The multilayer polymer thin film may comprise a sacrificial layer disposed directly over at least one of the reflective polarizer and the anti-reflective coating.

The sacrificial layer may comprise a moiety having a surface energy of less than approximately 38 dyne/cm.

The sacrificial layer may comprise a moiety selected from the group consisting of polyethylene, polypropylene, and a fluorinated polymer.

According to a second aspect, there is provided a method comprising: extruding alternating first and second polymer layers to form a reflective polarizer (RP) stack; extruding alternating third and fourth polymer layers to form an anti-reflective coating directly overlying the reflective polarizer (RP) stack to form a multilayer polymer thin film comprising the reflective polarizer stack and the anti-reflective coating, wherein the reflective polarizer (RP) stack and the anti-reflective coating are extruded simultaneously; and applying an in-plane stress to the multilayer polymer thin film.

The method may comprise forming a sacrificial layer directly over at least one of the reflective polarizer stack and the anti-reflective coating.

The method may further comprise co-extruding a sacrificial polymer layer directly over at least one of the reflective polarizer stack and the anti-reflective coating.

The method may further comprise co-extruding a sacrificial polymer layer directly over the anti-reflective coating and applying the in-plane stress to the multilayer polymer thin film prior to removing the sacrificial layer.

Applying the in-plane stress may comprise: attaching a clip array to opposing edges of the multilayer polymer thin film, the clip array comprising a plurality of first clips slidably disposed on a first track located proximate to a first edge of the multilayer polymer thin film and a plurality of second clips slidably disposed on a second track located proximate to a second edge of the multilayer polymer thin film; applying a positive in-plane strain to the multilayer polymer thin film along a transverse direction by increasing a distance between the first clips and the second clips; and decreasing an inter-clip spacing amongst the first clips and amongst the second clips along a machine direction while applying the in-plane strain.

The method may comprise heating the multilayer polymer thin film to a temperature greater than a glass transition temperature of at least one component of the multilayer polymer thin film while applying the in-plane stress.

The method may comprise laminating the multilayer polymer thin film to a transparent substrate.

According to a third aspect, there is provided a multilayer polymer thin film comprising: a reflective polarizer (RP) comprising alternating first and second layers, wherein the first layers each comprise an isotropic polymer thin film and the second layers each comprise an anisotropic polymer thin film; and an anti-reflective coating (ARC) located directly over the reflective polarizer, the anti-reflective coating comprising alternating third and fourth layers, wherein the third layers each comprise an isotropic polymer thin film or an anisotropic polymer thin film and the fourth layers each comprise an isotropic polymer thin film, wherein an in-plane refractive index nx(1) of the first layers is less than an in-plane refractive index nx(2) of the second layers, and an in-plane refractive index nx(3) of the third layers is greater than an in-plane refractive index nx(4) of the fourth layers.

The multilayer polymer thin film may comprise a sacrificial layer disposed directly over at least one of the reflective polarizer and the anti-reflective coating.

The sacrificial layer may comprise a moiety selected from the group consisting of polytetrafluoroethylene, polyvinylidene fluoride, polydimethylsiloxane, polypropylene, polyethylene, ethylene-vinyl acetate, polyoxymethylene, polystyrene, polyvinyl alcohol, and derivatives thereof.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 shows schematic perspective illustrations of example multilayer polymer thin film configurations according to some embodiments.
FIG. 2 shows cross sectional views of example multilayer polymer thin films according to some embodiments.
FIG. 3 illustrates an example single step extrusion method for forming a multilayer polymer thin film according to some embodiments.
FIG. 4 is a schematic illustration of an orthogonal consecutive stretching (OCS) apparatus and method for deforming and orienting a polymer thin film according to some embodiments.
FIG. 5 is a schematic view of an example thin film orientation system for manufacturing an anisotropic polymer thin film according to some embodiments.
FIG. 6 is a schematic view of a thin film orientation system for manufacturing an anisotropic polymer thin film according to further embodiments.
FIG. 7 illustrates a roll-to-roll manufacturing configuration for conveying and orienting a polymer thin film according to certain embodiments.
FIG. 8 shows the reflective behavior of an example multilayer polymer thin film along a transmissive axis according to some embodiments.
FIG. 9 shows the reflective behavior of an example multilayer polymer thin film along a block axis according to some embodiments.
FIG. 10 is a plot of reflectivity versus wavelength along a block axis for a reflective polarizer stack without incorporating an anti-reflective (AR) coating according to certain embodiments.
FIG. 11 is a plot of reflectivity versus wavelength along a block axis for an example multilayer polymer thin film according to various embodiments.
FIG. 12 is an illustration of exemplary augmented-reality glasses that may be used in connection with embodiments of this disclosure.
FIG. 13 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION

The optical, thermal, and mechanical response of a polymer thin film may be determined by its chemical composition, the chemical structure of the polymer repeat unit, its density and extent of crystallinity, as well as the alignment of the crystals and/or polymer chains throughout the polymer matrix. Among these factors, the crystal or polymer chain alignment may dominate. In crystalline or semi-crystalline polymer thin films, an optical, thermal, or mechanical property or condition may be correlated to the degree or extent of crystal orientation, whereas the degree or extent of chain entanglement may create comparable optical, thermal, or mechanical properties in thin films that include an amorphous polymer.

An applied stress may be used to form a preferred alignment of crystals or polymer chains within a polymer thin film and induce a corresponding modification of the optical, thermal, and/or mechanical properties along different directions of the film. As disclosed further herein, during processing where a polymer thin film is stretched to induce a preferred alignment of crystals/polymer chains and an attendant modification of the refractive index/birefringence, thermal, and mechanical properties, Applicants have shown that an extrusion method can decrease the propensity for polymer chain entanglement within the extruded thin film.

An extruded polymer thin film or polymer multilayer may be stretched using single or multiple stretching events. Some stretching processes may include two successive stretching events. For instance, orthogonal consecutive stretching (OCS) may be used to develop structural fingerprints, such as smaller lamellar thicknesses and higher degrees of polymer chain orientation at draw ratios less than the draw ratios used to achieve similar structural fingerprints via comparative single stretching (SS) or parallel consecutive stretching (PCS) techniques. Orthogonal consecutive stretching may include first stretching a polymer thin film along a first in-plane axis, and then subsequently stretching the polymer thin film along a second in-plane axis that is orthogonal to the first in-plane axis.

Stretching may include a single act of stretching or plural, successive stretching events, such as along different in-plane directions of a polymer thin film. The act of stretching may be velocity limited or strain rate limited. In some embodiments, a polymer thin film may be stretched at a variable or constant velocity. In some embodiments, the polymer thin film may be stretched using a variable strain rate or a constant strain rate (e.g., 0.5/sec, 1/sec, 5/sec, or 10/sec, including ranges between any of the foregoing values). By way of example, the strain rate may decrease throughout an act of stretching and/or amongst different stretching events from an initial strain rate (e.g., 5/sec) to a final strain rate (e.g., 0.5/sec).

The crystalline content within the polymer thin film may increase during the act of stretching. In some embodiments, stretching may alter the orientation of crystals within a polymer thin film without substantially changing the crystalline content.

A polymer thin film may be oriented either uniaxially or biaxially multilayer to form a reflective polarizer. An anisotropic polymer thin film may be formed using a thin film orientation system configured to heat and stretch a polymer thin film in at least one in-plane direction in one or more distinct regions thereof. In some embodiments, a thin film orientation system may be configured to stretch a polymer thin film, i.e., a crystallizable polymer thin film, along only one in-plane direction. For instance, a thin film orientation system may be configured to apply an in-plane stress to a polymer thin film along the x-direction while allowing the thin film to relax along an orthogonal in-plane direction (e.g., along the y-direction). As used herein, the relaxation of a polymer thin film may, in certain examples, accompany the absence of an applied stress along a relaxation direction.

According to some embodiments, within an example orientation system, a polymer thin film may be heated and stretched transversely to a direction of film travel through the system. In such embodiments, a polymer thin film may be held along opposing edges by plural movable clips slidably disposed along a diverging track system such that the polymer thin film is stretched in a transverse direction (TD) as it moves along a machine direction (MD) through heating and deformation zones of the thin film orientation system. In some embodiments, the stretching rate in the transverse direction and the relaxation rate in the machine direction may be independently and locally controlled. In certain embodiments, large scale production may be enabled, for example, using a roll-to-roll manufacturing platform.

In various examples, the extent of relaxation perpendicular to the stretch direction may be approximately equal to the square root of the stretch ratio in the stretch direction. In some embodiments, the extent of relaxation may be substantially constant throughout the stretching process(es). In further embodiments, the extent of relaxation may decrease, with greater relaxation associated with the beginning of a stretch step and lesser relaxation associated with the end of a stretch step.

Following deformation of the polymer thin film, a thermal setting can be applied to the film. The thermal setting temperature can be less than, equal to, or greater than an orientation temperature but above glass transition temperature of the polymers. The thermal setting can be at a constant strain or a variable strain. The thermal setting may be followed by cooling of the polymer thin film. The act of cooling may include allowing the polymer thin film to cool naturally, at a set cooling rate, or by quenching, such as by purging with a low temperature gas, which may thermally stabilize the polymer thin film.

The presently disclosed polymer thin films may be characterized as optical quality polymer thin films and may form, or be incorporated into, an optical element such as a reflective polarizer or an anti-reflective coating. Optical elements may be used in various display devices, such as virtual reality (VR) and augmented reality (AR) glasses and headsets. The efficiency of these and other optical elements may depend on the degree of optical clarity, thermal conductivity and/or mechanical response.

As used herein, the terms "polymer thin film" and "polymer layer" may be used interchangeably. Furthermore, reference to a "polymer thin film" or a "polymer layer" may include reference to a "multilayer polymer thin film" unless the context clearly indicates otherwise.

In accordance with various embodiments, an optical element includes a reflective polarizer (RP) co-integrated with an anti-reflective coating. The anti-reflective coating (ARC) is configured to decrease the reflectance of visible light and IR radiation at least along the transmissive axis of the reflective polarizer. In various embodiments, the reflective polarizer includes a stack of alternating isotropic and anisotropic polymer layers, and the anti-reflective coating includes one or more polymer layers having a high refractive index and one or more polymer layers having a low refractive index arranged in an alternating ABAB... architecture.

In particular embodiments, the reflective polarizer stack and the anti-reflective coating may be co-extruded in a single-step process that decreases manufacturing complexity and, relative to comparative processes, obviates the creation of orange peel defects and the undesired realization of reflectivity ripple along the block axis.

Optical properties of the RP-ARC multilayer may be tuned by applying an in-plane stress to the multilayer that induces an alignment of crystallites within the thin films and an attendant modification of refractive index and birefringence. For AR/VR applications, for example, the RP-ARC multilayer may be laminated over a transparent substrate, such as a varifocal lens.

In some embodiments, a sacrificial polymer layer may be co-extruded with the RP and ARC stacks to over-form and protect terminal layers within the multilayer stack. In some examples, the deleterious effects of direct contact between an extrusion die and functional terminal layers of a multilayer extrudate may be overcome by incorporating one or more sacrificial layers that are configured to essentially absorb surface damage caused by the die. Such sacrificial layers may be removed following stretching and orientation of the polymer layers but prior to lamination to a substrate.

Example sacrificial layers may include low surface energy polymers (polymer S) such as polydimethylsiloxane, polypropylene, polyethylene, ethylene-vinyl acetate, polyoxymethylene, polystyrene, polyvinyl alcohol, and fluoropolymers such as polytetrafluoroethylene and polyvinylidene fluoride, as well as combinations and co-polymers thereof. In certain embodiments, a sacrificial layer may be configured as a peelable skin layer, and may have a surface energy of less than approximately 38 dyne/cm.

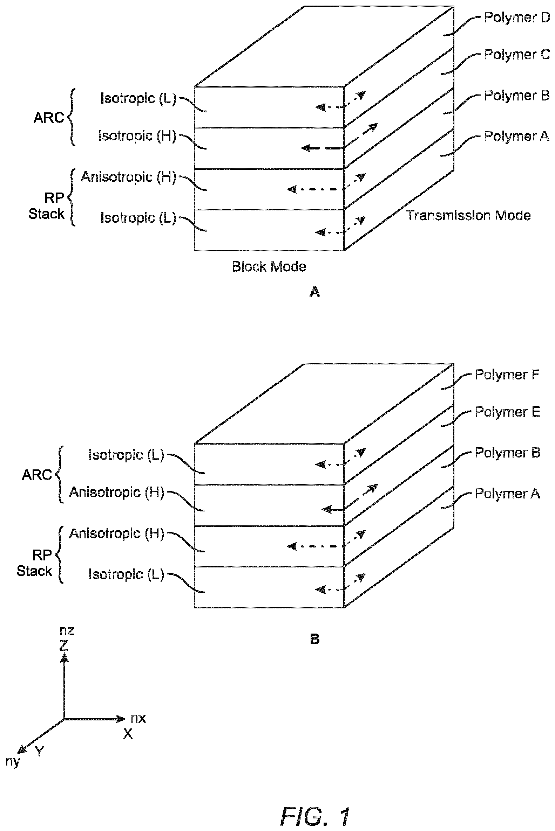

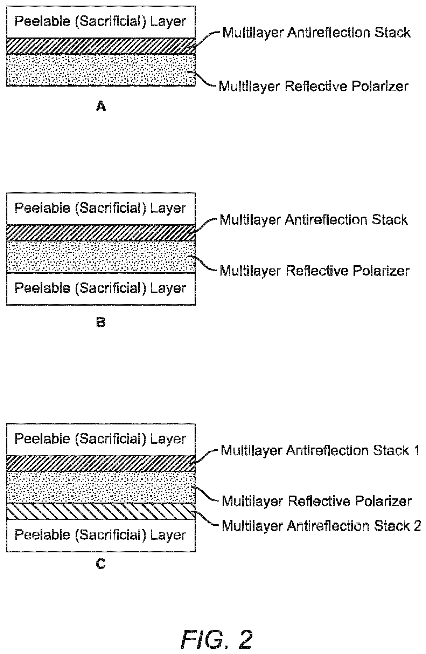

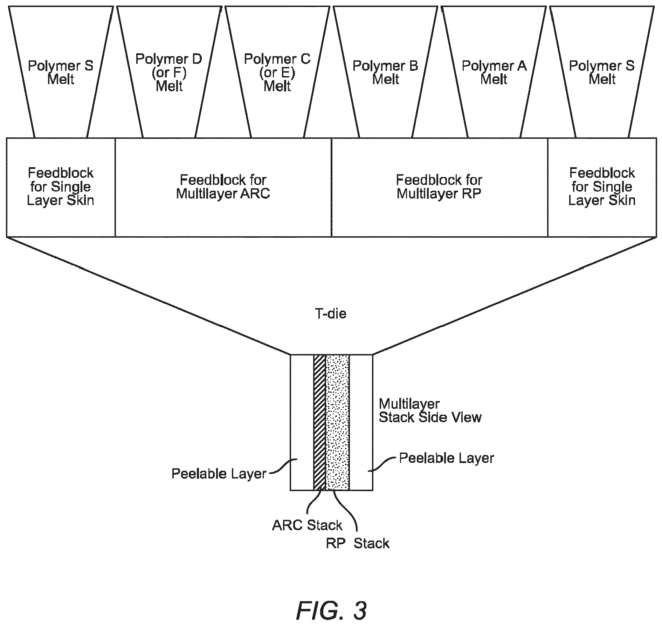

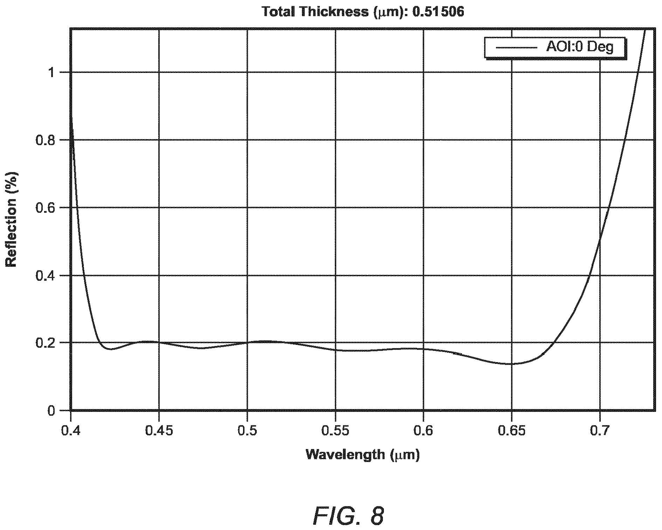

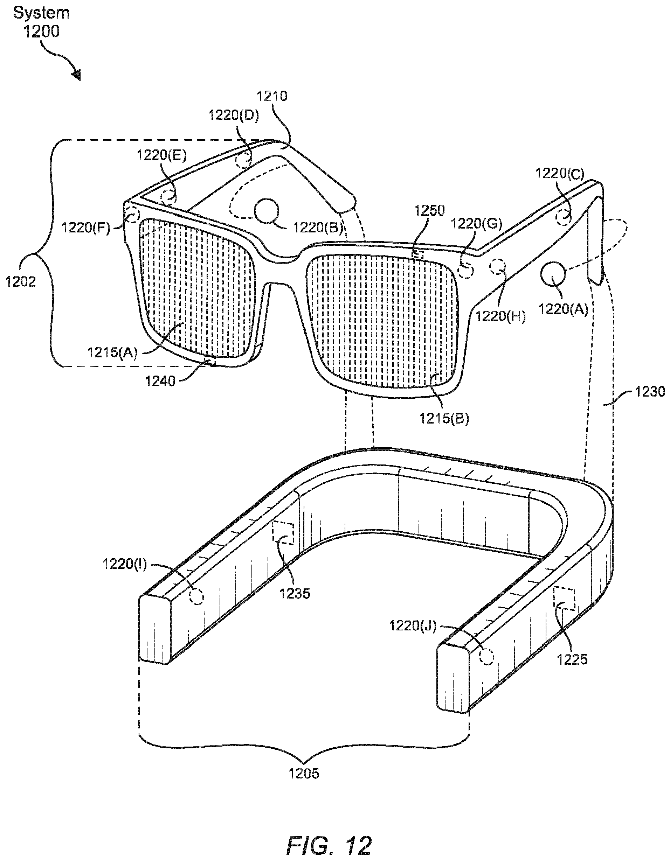

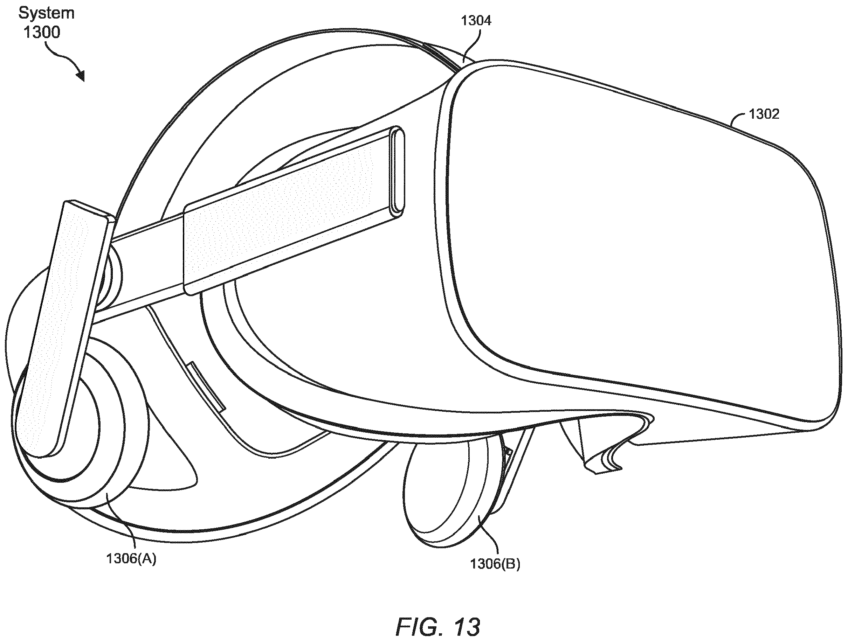

The following will provide, with reference to FIGS. 1-13, a detailed description of multilayer polymer thin films and their methods of manufacture. The discussion associated with FIGS. 1 and 2 relates to example RP-ARC multilayer polymer thin film architectures. The discussion associated with FIGS. 3-7 relates to co-extrusion and crystal alignment methods for forming oriented polymer layers within multilayer thin films. The discussion associated with FIGS. 8-11 relates to the optical characterization of various multilayer polymer thin films. The discussion associated with FIGS. 12 and 13 relates to exemplary virtual reality and augmented reality devices that may include one or more multilayer polymer thin films as disclosed herein.

Example RP-ARC multilayer polymer thin films are shown schematically in FIG. 1. Referring first to FIG. 1A, a multilayer polymer thin film includes a reflective polarizer stack and an overlying anti-reflective coating. The reflective polarizer stack includes alternating first and second polymer thin films.

In the illustrated embodiment, the first polymer thin film may be optically isotropic, where nₓ=n_{y}=n_{z}, and may include a first polymer composition, i.e., polymer A. In certain embodiments, the first polymer thin film may be characterized by refractive indices nₓ < 1.8, n_{y} < 1.8, and nₓ-n_{y} < 0.1.

The second polymer thin film may include a crystalline or semi-crystalline optically anisotropic polymer, where nₓ > n_{y} > n_{z} or nₓ > n_{y} = n_{z}, for example, and may include a second polymer composition, i.e., polymer B. In certain embodiments, the second polymer thin film may be characterized by nₓ > 1.8, and nₓ - n_{y} > 0.1, e.g., nₓ > 1.85, and nₓ - n_{y} > 0.2. In particular embodiments, a high contrast ratio may be achieved where the refractive indices for adjacent layers (e.g., first and second thin films) are equal along a common direction, e.g., n_{y}(film 1) = n_{y}(film 2) as shown schematically in FIG. 1A.

Polymer A may include one or more polymers synthesized from at least one acid monomer and at least one alcohol monomer. Example acids include naphthalene dicarboxylic acid, terephthalic acid, isophthalic acid, azelaic acid, norbornene dicarboxylic acid, and other dicarboxylic acids. Suitable acids may be polymerized with glycols including mono-ethylene glycol, diethylene glycol, propylene glycol, butylene glycol, cyclohexane dimethanol, polyethylene glycol, di-hydrogenated organic compounds and the like, as well as combinations and derivatives, including isomers and co-polymers thereof.

By way of example, polymer B may include polyethylene naphthalate, polyethylene terephthalate, polyethylene isophthalate, polybutylene naphthalate, polybutylene terephthalate, polyoxymethylene, as well as aliphatic or semi-aromatic polyamides. In some cases, polymer B may further include one or more oligomers as identified above. The molecular weight of the oligomer may be less than approximately 50% of the molecular weight of the polymer, e.g., less than approximately 30%, less than approximately 10%, less than approximately 5%, or less than approximately 1% of the molecular weight of the polymer. In some cases, polymer B may include a nucleating agent, such as talc, sodium benzoate, or an ionomer.

Referring still to FIG. 1A, an anti-reflective coating (ARC) overlies the RP stack. The ARC includes alternating third and fourth polymer thin films. In one embodiment, the third and fourth polymer thin films may include amorphous, isotropic polymers having a high (H) refractive index and a low (L) refractive index, respectively. For instance, the third polymer thin film may include a third polymer composition, i.e., polymer C, having in-plane refractive indices (nₓ and n_{y}) of at least approximately 1.6, with nₓ - n_{y} < 0.1. The fourth polymer thin film may include a fourth polymer composition, i.e., polymer D, having in-plane refractive indices (nₓ and n_{y}) each less than approximately 1.6, with nₓ - n_{y} < 0.1.

Examples of suitable moieties for polymer C include poly(pentabromophenyl methacrylate), poly(pentabromophenyl acrylate), poly(pentabromobenzyl methacrylate), poly(pentabromobenzyl acrylate), poly(2,4,6-tribromophenyl methacrylate), poly(vinylphenylsulfide), poly(1-napthyl methacrylate), poly(2-vinylthiophene), poly(2,6-dichlorostyrene), poly(N-vinylphthalimide), poly(2-chlorostyrene), poly(pentachlorophenyl methacrylate), as well as combinations and derivatives, including isomers and co-polymers, thereof.

Examples of suitable moieties for polymer D include poly(1,1,1,3,3,3-hexafluoroisopropyl acrylate) (PHFIA), poly(2,2,3,3,4,4,4-heptafluorobutyl acrylate), poly(2,2,3,3,4,4,4-heptafluorobutyl methacrylate), poly(2,2,3,3,3-pentafluoropropyl acrylate), poly(1,1,1,3,3,3-hexafluoroisopropyl methacrylate), poly(2,2,3,4,4,4-hexafluorobutyl acrylate), poly(2,2,3,4,4,4-hexafluorobutyl methacrylate), poly(2,2,3,3,3-pentafluoropropyl methacrylate), poly(2,2,2-trifluoroethyl acrylate), poly(2,2,3,3-tetrafluoropropyl acrylate), poly(2,2,3,3-tetrafluoropropyl methacrylate), poly(2,2,2-trifluoroethyl methacrylate), as well as combinations and derivatives, including isomers and co-polymers, thereof. In further examples, polymer D may be selected from the compositions associated with polymer A.

Referring now to FIG. 1B, according to further embodiments, an anti-reflective coating (ARC) includes alternating fifth and sixth polymer thin films. The fifth polymer thin film may include a crystalline or semi-crystalline optically anisotropic polymer. The fifth polymer thin film may include a high index polymer, i.e., polymer E, where n_{y} > 1.6, and the index along the y direction is greater than n_{y} for the second polymer thin film, i.e., n_{y}(film 5) > n_{y}(film 2). In some examples, polymer E may be selected from the compositions associated with polymer B.

The sixth polymer thin film may include an amorphous, isotropic polymer having a low refractive index, i.e., polymer F, where nₓ < 1.6. In some examples, polymer F may be selected from the compositions associated with polymer D or polymer A.

Although the multilayer polymer thin films of FIG. 1 are illustrated as having an RP stack and an ARC that each include two polymer layers, it will be appreciated that the total number of layers constituting the RP stack and the ARC may be independently chosen to be any integer greater than 2. For instance, the RP stack may include 3 or more polymer layers, e.g., 3, 10, 100, 200, 300, 400, 500 or more layers, and the ARC may include 3 or more polymer layers, e.g., 3, 10, 20, 30, 40, 50 or more layers.

The architecture of example multilayer polymer thin films, including the incorporation of one or more sacrificial layers, is shown in FIG. 2. Following orientation of the polymer crystals and removal of the sacrificial layer(s), a multilayer polymer thin film may be laminated over an optical substrate, such as a glass or polymer lens.

Referring to FIG. 3, illustrated is a simplified extrusion apparatus that may be implemented in conjunction with an example method to form a multilayer polymer thin film. In an example method, polymer melts for the RP stack components, the ARC components, and one or two optional sacrificial layers may be simultaneously fed through respective feed blocks of an extrusion die (e.g., T-die). The co-extruded multilayer may be stretched and, following the act of stretching, the sacrificial layer(s) may be removed.

An example method may include extruding alternating first and second polymer layers to form a reflective polarizer (RP) stack, while simultaneously extruding alternating third and fourth polymer layers to form an anti-reflective coating directly overlying the reflective polarizer (RP) stack to form a multilayer polymer thin film that includes the reflective polarizer stack and the anti-reflective coating. The method may further include applying an in-plane stress to the multilayer polymer thin film.

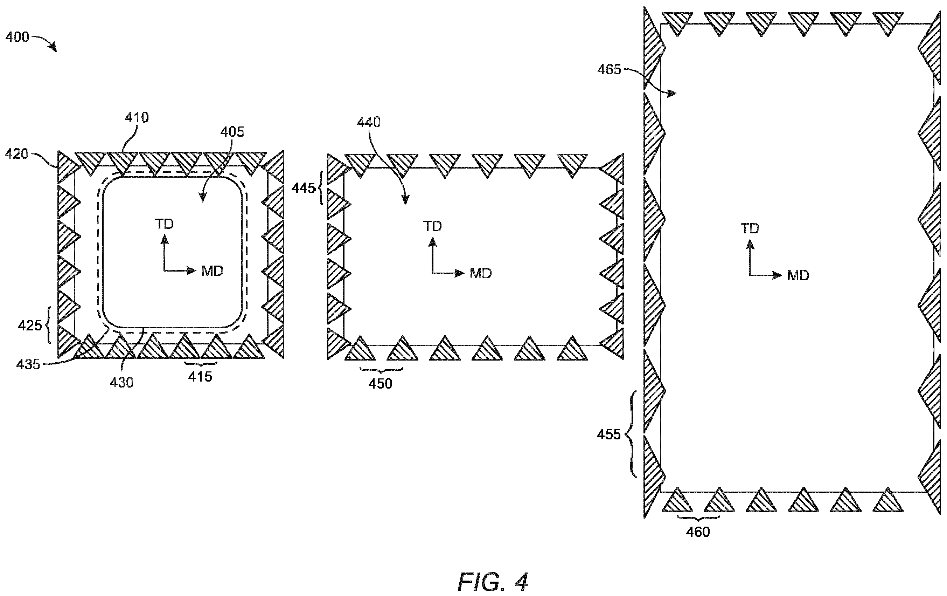

Referring to FIG. 4, shown schematically is an orthogonal consecutive stretching (OSC) system 400 and a corresponding method where a polymer thin film 405 may be first stretched in the machine direction (MD) and then stretched in the transverse direction (TD). In the illustrated embodiment, polymer thin film 405 may be initially secured between opposing clip arrays 410, 420. The inter-clip spacing 415 within clip array 410 and the inter-clip spacing 425 within clip array 420 may be independently controlled. Thus, throughout a stretching process, an inter-clip spacing along different axes of orthogonal consecutive stretching (OSC) system 400 may decrease, increase, or be held constant. According to various embodiments, stretching of the polymer thin film 405 in the machine direction and stretching of the polymer thin film 405 in the transverse direction may occur simultaneously and/or successively.

By way of example, and referring still to FIG. 4, polymer thin film 405 may be stretched in a first stretching step along a first axis, cooled and optionally cut to a desired width, and then stretched in a second stretching step. A temperature of the polymer thin film during the second stretching step may be at least approximately 5°C greater than a temperature of the polymer thin film during the first stretching step (e.g., approximately 5°C, approximately 10°C, approximately 15°C, or approximately 20°C greater, including ranges between any of the foregoing values).

During a second stretching step, the polymer thin film may be stretched along a second axis perpendicular to the first axis. The draw ratio during the second stretching step may be at least approximately 4, e.g., approximately 5, approximately 6, approximately 7, approximately 8, or more, including ranges between any of the foregoing values. In some embodiments, the draw ratio during the first stretching step may be less than the draw ratio during the second stretching step. By way of example, a draw ratio during the first stretching step may be less than approximately 3, or approximately 2, including ranges between any of the foregoing values. Following the second stretching step, the polymer thin film may be heated to increase its crystalline content.

Referring still to FIG. 4, heaters 430, 435 may be respectively located above and below the plane of polymer thin film 405, and may be configured to control a temperature of the polymer thin film during the acts of stretching. Heaters 430, 435 may include hot air blowers, for example. A temperature of a polymer thin film may be constant or substantially constant during one or more acts of stretching. Alternatively, a temperature of a polymer thin film may increase or decrease throughout stretching processes. Example temperatures may be greater than the polymer's glass transition temperature (T_{g}) but less than an onset temperature for melting (Tₘ).

During a first stretching process, an inter-clip spacing 450 within clip array 410 may increase, while an inter-clip spacing 445 within clip array 420 may be fixed. A tensile stress may be applied to the polymer thin film 405 along the machine direction while the polymer thin film is unstressed along the transverse direction, thus forming a uniaxially stretched polymer thin film 440. During a second and subsequent stretching process, an inter-clip spacing 455 within clip array 420 may increase, while an inter-clip spacing 460 within clip array 410 may be fixed. Thus, a tensile stress may be applied to the polymer thin film 440 along the transverse direction while the polymer thin film is unstressed along the machine direction, thus forming an OCS processed polymer thin film 465.

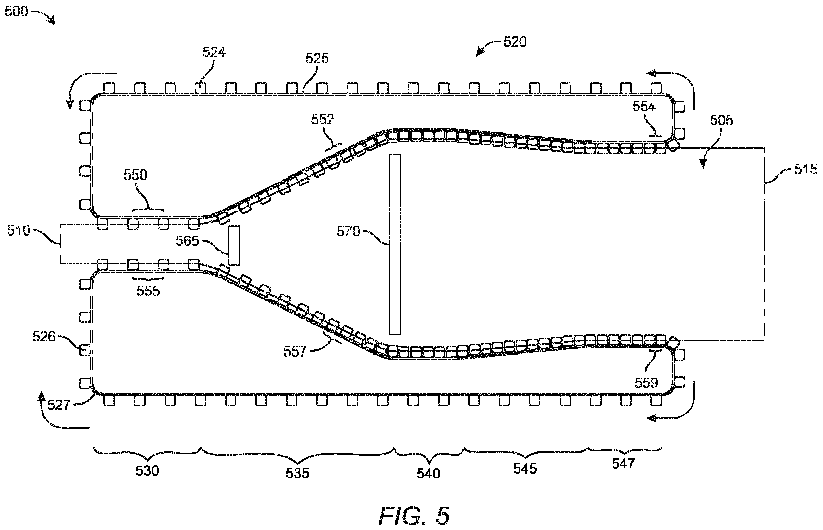

A single stage thin film orientation system for forming an optically anisotropic polymer thin film is shown schematically in FIG. 5. System 500 may include a thin film input zone 530 for receiving and pre-heating a crystallizable portion 510 of a polymer thin film 505, a thin film output zone 547 for outputting a crystallized and oriented portion 515 of the polymer thin film 505, and a clip array 520 extending between the input zone 530 and the output zone 547 that is configured to grip and guide the polymer thin film 505 through the system 500, i.e., from the input zone 530 to the output zone 547. Clip array 520 may include a plurality of movable first clips 524 that are slidably disposed on a first track 525 and a plurality of movable second clips 526 that are slidably disposed on a second track 527.

Polymer thin film 505 may include a single polymer layer or multiple (e.g., alternating) layers of first and second polymers, such as a multilayer ABAB... structure. Alternately, polymer thin film 505 may include a composite architecture having a crystallizable polymer thin film and a high Poisson's ratio polymer thin film directly overlying the crystallizable polymer thin film (not separately shown). In some embodiments, a polymer thin film composite may include a high Poisson's ratio polymer thin film reversibly laminated to, or printed on, a single crystallizable polymer thin film or a multilayer polymer thin film.

During operation, proximate to input zone 530, clips 524, 526 may be affixed to respective edge portions of polymer thin film 505, where adjacent clips located on a given track 525, 527 may be disposed at an inter-clip spacing 550, 555. For simplicity, in the illustrated view, the inter-clip spacing 550 along the first track 525 within input zone 530 may be equivalent or substantially equivalent to the inter-clip spacing 555 along the second track 527 within input zone 530. As will be appreciated, in alternate embodiments, within input zone 530, the inter-clip spacing 550 along the first track 525 may be different than the inter-clip spacing 555 along the second track 527.

In addition to input zone 530 and output zone 547, system 500 may include one or more additional zones 535, 540, 545, etc., where each of: (i) the translation rate of the polymer thin film 505, (ii) the shape of first and second tracks 525, 527, (iii) the spacing between first and second tracks 525, 527, (iv) the inter-clip spacing 550, 552, 554, 555, 557, 559, and (v) the local temperature of the polymer thin film 505, etc. may be independently controlled.

In an example process, as it is guided through system 500 by clips 524, 526, polymer thin film 505 may be heated to a selected temperature within each of zones 530, 535, 540, 545, 547. Fewer or a greater number of thermally controlled zones may be used. As illustrated, within zone 535, first and second tracks 525, 527 may diverge along a transverse direction such that polymer thin film 505 may be stretched in the transverse direction while being heated, for example, to a temperature greater than its glass transition temperature (T_{g}) but less than the onset of melting.

Referring still to FIG. 5, within zone 535 the spacing 552 between adjacent first clips 524 on first track 525 and the spacing 557 between adjacent second clips 526 on second track 527 may decrease relative to the inter-clip spacing 550, 555 within input zone 530. In certain embodiments, the decrease in clip spacing 552, 557 from the initial spacing 550, 555 may scale approximately as the square root of the transverse stretch ratio. The actual ratio may depend on the Poisson's ratio of the polymer thin film as well as the requirements for the stretched thin film, including flatness, thickness, etc. Accordingly, in some embodiments, the in-plane axis of the polymer thin films that is perpendicular to the stretch direction may relax by an amount equal to the square root of the stretch ratio in the stretch direction. By decreasing the clip spacings 552, 557 relative to inter-clip spacing 550, 555 the polymer thin film may be allowed to relax along the machine direction while being stretched along the transverse direction.

A temperature of the polymer thin film may be controlled within each heating zone. Withing stretching zone 535, for example, a temperature of the polymer thin film 505 may be constant or independently controlled within sub-zones 565, 570, for example. In some embodiments, the temperature of the polymer thin film 505 may be decreased as the stretched polymer thin film 505 enters zone 540. Rapidly decreasing the temperature (i.e., thermal quenching) following the act of stretching within zone 535 may enhance the conformability of the polymer thin film 505. In some embodiments, the polymer thin film 505 may be thermally stabilized, where the temperature of the polymer thin film 505 may be controlled within each of the post-stretch zones 540, 545, 547. A temperature of the polymer thin film may be controlled by forced thermal convection or by radiation, for example, IR radiation, or a combination thereof.

Downstream of stretching zone 535, according to some embodiments, a transverse distance between first track 525 and second track 527 may remain constant or, as illustrated, initially decrease (e.g., within zone 540 and zone 545) prior to assuming a constant separation distance (e.g., within output zone 547). In a related vein, the inter-clip spacing downstream of stretching zone 535 may increase or decrease relative to inter-clip spacing 552 along first track 525 and inter-clip spacing 557 along second track 527. For example, inter-clip spacing 555 along first track 525 within output zone 547 may be less than inter-clip spacing 552 within stretching zone 535, and inter-clip spacing 559 along second track 527 within output zone 547 may be less than inter-clip spacing 557 within stretching zone 535. According to some embodiments, the spacing between the clips may be controlled by modifying the local velocity of the clips on a linear stepper motor line, or by using an attachment and variable clip spacing mechanism connecting the clips to the corresponding track.

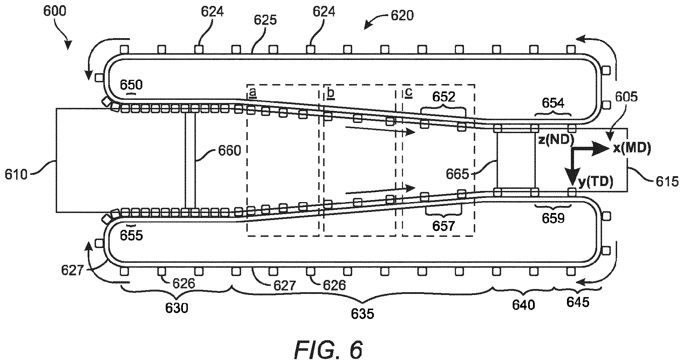

To facilitate cross-stretch relaxation while stretching in the TD direction, the inter-clip spacings 552, 557 withing stretching zone 535 may be decreased by at least approximately 20% (e.g., 20%, 30%, 40%, or 50% or more) relative to respective inter-clip spacings 550, 555 within input zone 530. The relaxation profile may be constant or variable, i.e., as a function of position, across stretching zone 535. According to some embodiments, a maximum TD draw ratio within stretching zone 535 be at least approximately 2 and less than approximately 4. The stretched and oriented polymer thin film 515 may be removed from system 500 and stretched in a further stretching step, such as via length orientation with relaxation as shown in FIG. 6.

Referring to FIG. 6, shown is a further example system for forming an anisotropic polymer thin film. Thin film orientation system 600 may include a thin film input zone 630 for receiving and pre-heating a crystalline or crystallizable portion 610 of a polymer thin film 605, a thin film output zone 645 for outputting an at least partially crystallized and oriented portion 615 of the polymer thin film 605, and a clip array 620 extending between the input zone 630 and the output zone 645 that is configured to grip and guide the polymer thin film 605 through the system 600. As in the previous embodiment, clip array 620 may include a plurality of first clips 624 that are slidably disposed on a first track 625 and a plurality of second clips 626 that are slidably disposed on a second track 627. In certain embodiments, crystalline or crystallizable portion 610 may correspond to stretched and oriented polymer thin film 615.

In an example process, proximate to input zone 630, first and second clips 624, 626 may be affixed to edge portions of polymer thin film 605, where adjacent clips located on a given track 625, 627 may be disposed at an initial inter-clip spacing 650, 655, which may be substantially constant or variable along both tracks within input zone 630. Within input zone 630 a distance along the transverse direction between first track 625 and second track 627 may be constant or substantially constant.

System 600 may additionally include one or more zones 635, 640, etc. The dynamics of system 600 allow independent control over: (i) the translation rate of the polymer thin film 605, (ii) the shape of first and second tracks 625, 627, (iii) the spacing between first and second tracks 625, 627 along the transverse direction, (iv) the inter-clip spacing 650, 655 within input zone 630 as well as downstream of the input zone (e.g., inter-clip spacings 652, 654, 657, 659), and (v) the local temperature of the polymer thin film, etc.

In an example process, as it is guided through system 600 by clips 624, 626, polymer thin film 605 may be heated to a selected temperature within each of zones 630, 635, 640, 645. A temperature greater than the glass transition temperature of a component of the polymer thin film 605 may be used during deformation (i.e., within zone 635), whereas a lesser temperature, an equivalent temperature, or a greater temperature may be used within each of one or more downstream zones.

As in the previous embodiment, the temperature of the polymer thin film 605 within stretching zone 635 may be locally controlled. According to some embodiments, the temperature of the polymer thin film 605 may be maintained at a constant or substantially constant value during the act of stretching. According to further embodiments, the temperature of the polymer thin film 605 may be incrementally increased within stretching zone 635. That is, the temperature of the polymer thin film 605 may be increased within stretching zone 635 as it advances along the machine direction. By way of example, the temperature of the polymer thin film 605 within stretching zone 635 may be locally controlled within each of heating zones a, b, and c.

The temperature profile may be continuous, discontinuous, or combinations thereof. As illustrated in FIG. 6, heating zones a, b, and c may extend across the width of the polymer thin film 605, and the temperature within each zone may be independently controlled according to the relationship T_{g} < Tₐ < T_{b} < T_{c} < Tₘ. A temperature difference between neighboring heating zones may be less than approximately 20°C, e.g., less than approximately 10°C, or less than approximately 5°C.

Referring still to FIG. 6, within zone 635 the spacing 652 between adjacent first clips 624 on first track 625 and the spacing 657 between adjacent second clips 626 on second track 627 may increase relative to respective inter-clip spacings 650, 655 within input zone 630, which may apply an in-plane tensile stress to the polymer thin film 605 and stretch the polymer thin film along the machine direction. Moreover, the extent of inter-clip spacing on one or both tracks 625, 627 within deformation zone 635 may be constant or variable and, for example, increase as a function of position along the machine direction.

Within stretching zone 635, the inner-clip spacings 652, 657 may increase linearly such that the primary mode of deformation may be at constant velocity. For example, a strain rate of the polymer thin film may decrease along the machine direction. In further embodiments, the polymer thin film 605 may be stretched at a constant strain-rate where the inter-clip spacing may increase exponentially.

In certain examples, a progressively decreasing strain rate may be implemented with thin film orientation system 600 to generate a high refractive index polymer thin film. For instance, within stretching zone 635 an inter-clip spacing may be configured such that a distance between each successive pair of clips 624, 626 increases along the machine direction. The inter-clip spacing between each successive pair of clips may be independently controlled to achieve a desired strain rate along the machine direction.

In response to the tensile stress applied along the machine direction, system 600 is configured to inhibit the generation of stresses and an attendant realignment of crystals along the machine direction. As illustrated, within zone 635, first and second tracks 625, 627 may converge along a transverse direction such that polymer thin film 605 may relax in the transverse direction while being stretched in the machine direction. Using a single stretching step or multiple stretching steps, polymer thin film 605 may be stretched by a factor of at least approximately 4 (e.g., 4, 5, 6, 7, 8, 9, 10, 20, 40, 100, or more, including ranges between any of the foregoing values).

Within stretching zone 635, an angle of inclination of first and second tracks 625, 627 (i.e., with respect to the machine direction) may be constant or variable. In particular examples, the inclination angle within stretching zone 635 may decrease along the machine direction. That is, according to certain embodiments, the inclination angle within heating zone a may be greater than the inclination angle within heating zone b, and the inclination angle within heating zone b may be greater than the inclination angle within heating zone c. Such a configuration may be used to provide a progressive decrease in the relaxation rate (along the transverse direction) within the stretching zone 635 as the polymer thin film advances through system 600.

In some embodiments, the temperature of the polymer thin film 605 may be decreased as the stretched polymer thin film 605 exits zone 635. In some embodiments, the polymer thin film 605 may be thermally stabilized, where the temperature of the polymer thin film 605 may be controlled within each of the post-deformation zones 640, 645. A temperature of the polymer thin film may be controlled by forced thermal convection or by radiation, for example, IR radiation, or a combination thereof.

Downstream of deformation zone 635, the inter-clip spacing may increase or remain substantially constant relative to inter-clip spacing 652 along first track 625 and inter-clip spacing 657 along second track 627. For example, inter-clip spacing 655 along first track 625 within output zone 645 may be substantially equal to the inter-clip spacing 652 as the clips exit zone 635, and inter-clip spacing 659 along second track 627 within output zone 645 may be substantially equal to the inter-clip spacing 657 as the clips exit zone 635. Following the act of stretching, polymer thin film 605 may be annealed, for example, within one or more downstream zones 640, 645.

The strain impact of the thin film orientation system 600 is shown schematically by unit segments 660, 665, which respectively illustrate pre- and post-deformation dimensions for a selected area of polymer thin film 605. In the illustrated embodiment, polymer thin film 605 has a pre-stretch width (e.g., along the transverse direction) and a pre-stretch length (e.g., along the machine direction). As will be appreciated, a post-stretch width may be less than the pre-stretch width and a post-stretch length may be greater than the pre-stretch length.

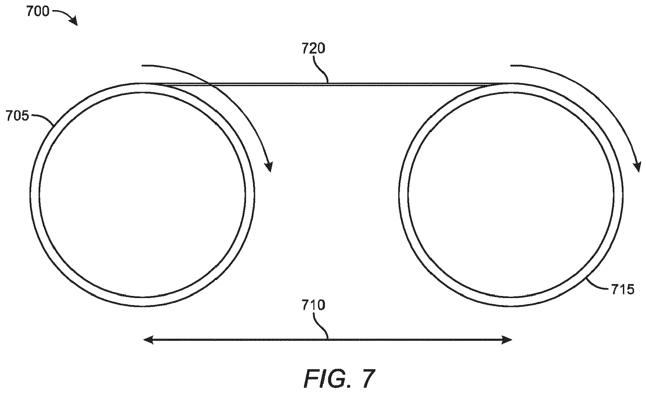

In some embodiments, a roll-to-roll system may be integrated with a thin film orientation system, such as thin film orientation system 500 or thin film orientation system 600, to manipulate a polymer thin film. In further embodiments, as illustrated herein with reference FIG. 7, a roll-to-roll system may itself be configured as a thin film orientation system.

An example roll-to-roll polymer thin film orientation system is depicted in FIG. 7. In conjunction with system 700, a method for stretching a polymer thin film 720 may include mounting the polymer thin film between linear rollers 705, 715 and heating a portion of the polymer thin film located between the rollers 705, 715 to a temperature greater than its glass transition temperature. Rollers 705, 715 may be arranged with a controllable spacing 710 therebetween. A heat source (not shown), such as an IR source optionally equipped with an IR reflector, may be used to heat the polymer thin film 720 within a deformation region between the rollers.

While controlling the temperature of the polymer thin film, rollers 705, 715 may be engaged and the polymer thin film may be stretched. For instance, first roller 705 may rotate at a first rate and second roller 715 may rotate at a second rate greater than the first rate to stretch the polymer thin film along a machine direction therebetween. Within a deformation zone between rollers, system 700 may be configured to locally control the temperature and the strain rate of the polymer thin film. In some examples, as the polymer thin film advances from roller 705 to roller 715, a temperature of the polymer thin film may increase, and a strain rate of the polymer thin film may decrease. Downstream of roller 715, the polymer thin film may then be cooled while maintaining the applied stress. System 700 may be used to form a uniaxially oriented polymer thin film. Additional rollers may be added to system 700 to control the conveyance and take-up of the polymer thin film.

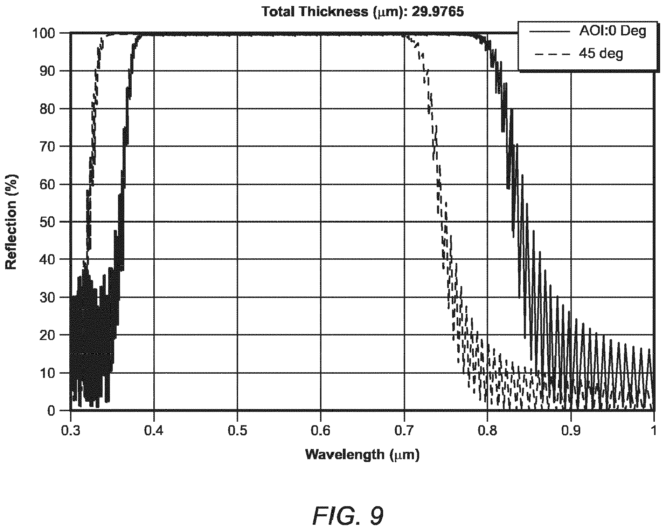

Referring to FIGS. 8 and 9, shown are plots of the reflectance versus wavelength demonstrating the performance of a co-integrated anti-reflective coating. The reflectance along the transmissive axis of the multilayer is shown in FIG. 8, and the reflectance along the block axis of the multilayer for normal (0°) and 45° incident light is shown in FIG. 9.

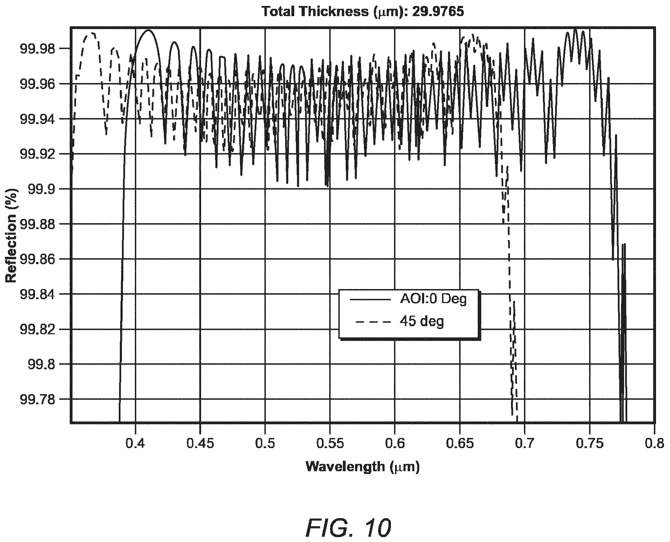

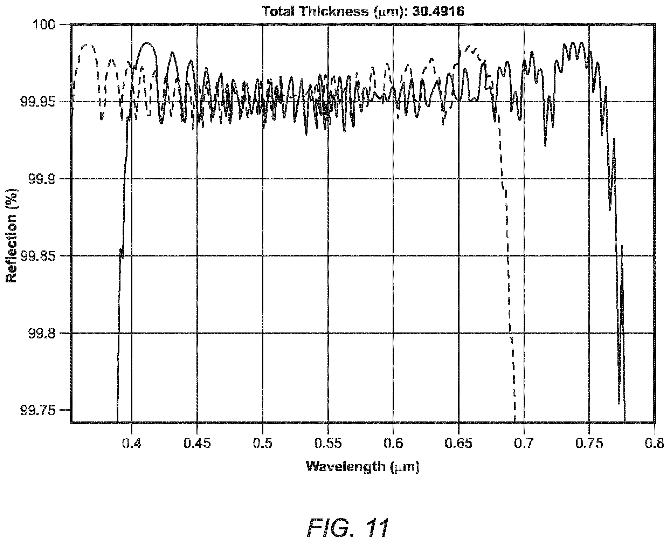

Referring to FIG. 10, shown is reflectivity as a function of wavelength along the block axis of a multilayer reflective polarizer without an over-formed ARC. Referring to FIG. 11, shown is reflectivity as a function of wavelength along the block axis for a multilayer reflective polarizer with an over-formed ARC according to various embodiments. The addition of the ARC substantially reduces the magnitude of the rippling effect.

As disclosed herein, an optical element includes a polymer multilayer having a reflective polarizer (RP) stack and an adjacent anti-reflection (AR) stack. The reflective polarizer stack may include an alternating ABAB... architecture of semicrystalline, optically anisotropic polymer layers and amorphous, optically isotropic polymer layers. Along a block mode of the reflective polarizer, an in-plane refractive index of the anisotropic polymer layers may be greater than an in-plane refractive index of the isotropic polymer layers. On the other hand, along a transmissive (pass) mode orthogonal to the block mode, in-plane refractive indices of the anisotropic and isotropic polymer layers may be substantially equal.

The AR stack may include a repeating ABAB... architecture of polymer thin films characterized by alternating high and low refractive indices. The optical element may have an average reflection of less than approximately 1% in the transmission direction and an average reflection of at least approximately 90% in the block direction. The RP stack and the AR stack may be formed simultaneously by co-extrusion.

According to particular embodiments, to protect the outer-most layers of the optical element during extrusion and subsequent processing, one or a pair of sacrificial layers may be over-formed during a single act of extrusion and later removed. The sacrificial layer(s) may be removed, for example, prior to laminating the optical element to a substrate such as a lens.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 1200 in FIG. 12) or that visually immerses a user in an artificial reality (such as, e.g., virtual-reality system 1300 in FIG. 13). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 12, augmented-reality system 1200 may include an eyewear device 1202 with a frame 1210 configured to hold a left display device 1215(A) and a right display device 1215(B) in front of a user's eyes. Display devices 1215(A) and 1215(B) may act together or independently to present an image or series of images to a user. While augmented-reality system 1200 includes two displays, embodiments of this disclosure may be implemented in augmented-reality systems with a single NED or more than two NEDs.

In some embodiments, augmented-reality system 1200 may include one or more sensors, such as sensor 1240. Sensor 1240 may generate measurement signals in response to motion of augmented-reality system 1200 and may be located on substantially any portion of frame 1210. Sensor 1240 may represent one or more of a variety of different sensing mechanisms, such as a position sensor, an inertial measurement unit (IMU), a depth camera assembly, a structured light emitter and/or detector, or any combination thereof. In some embodiments, augmented-reality system 1200 may or may not include sensor 1240 or may include more than one sensor. In embodiments in which sensor 1240 includes an IMU, the IMU may generate calibration data based on measurement signals from sensor 1240. Examples of sensor 1240 may include, without limitation, accelerometers, gyroscopes, magnetometers, other suitable types of sensors that detect motion, sensors used for error correction of the IMU, or some combination thereof.

In some examples, augmented-reality system 1200 may also include a microphone array with a plurality of acoustic transducers 1220(A)-1220(J), referred to collectively as acoustic transducers 1220. Acoustic transducers 1220 may represent transducers that detect air pressure variations induced by sound waves. Each acoustic transducer 1220 may be configured to detect sound and convert the detected sound into an electronic format (e.g., an analog or digital format). The microphone array in FIG. 12 may include, for example, ten acoustic transducers: 1220(A) and 1220(B), which may be designed to be placed inside a corresponding ear of the user, acoustic transducers 1220(C), 1220(D), 1220(E), 1220(F), 1220(G), and 1220(H), which may be positioned at various locations on frame 1210, and/or acoustic transducers 1220(I) and 1220(J), which may be positioned on a corresponding neckband 1205.

In some embodiments, one or more of acoustic transducers 1220(A)-(J) may be used as output transducers (e.g., speakers). For example, acoustic transducers 1220(A) and/or 1220(B) may be earbuds or any other suitable type of headphone or speaker.

The configuration of acoustic transducers 1220 of the microphone array may vary. While augmented-reality system 1200 is shown in FIG. 12 as having ten acoustic transducers 1220, the number of acoustic transducers 1220 may be greater or less than ten. In some embodiments, using higher numbers of acoustic transducers 1220 may increase the amount of audio information collected and/or the sensitivity and accuracy of the audio information. In contrast, using a lower number of acoustic transducers 1220 may decrease the computing power required by an associated controller 1250 to process the collected audio information. In addition, the position of each acoustic transducer 1220 of the microphone array may vary. For example, the position of an acoustic transducer 1220 may include a defined position on the user, a defined coordinate on frame 1210, an orientation associated with each acoustic transducer 1220, or some combination thereof.

Acoustic transducers 1220(A) and 1220(B) may be positioned on different parts of the user's ear, such as behind the pinna, behind the tragus, and/or within the auricle or fossa. Or, there may be additional acoustic transducers 1220 on or surrounding the ear in addition to acoustic transducers 1220 inside the ear canal. Having an acoustic transducer 1220 positioned next to an ear canal of a user may enable the microphone array to collect information on how sounds arrive at the ear canal. By positioning at least two of acoustic transducers 1220 on either side of a user's head (e.g., as binaural microphones), augmented-reality device 1200 may simulate binaural hearing and capture a 3D stereo sound field around about a user's head. In some embodiments, acoustic transducers 1220(A) and 1220(B) may be connected to augmented-reality system 1200 via a wired connection 1230, and in other embodiments acoustic transducers 1220(A) and 1220(B) may be connected to augmented-reality system 1200 via a wireless connection (e.g., a BLUETOOTH connection). In still other embodiments, acoustic transducers 1220(A) and 1220(B) may not be used at all in conjunction with augmented-reality system 1200.

Acoustic transducers 1220 on frame 1210 may be positioned in a variety of different ways, including along the length of the temples, across the bridge, above or below display devices 1215(A) and 1215(B), or some combination thereof. Acoustic transducers 1220 may also be oriented such that the microphone array is able to detect sounds in a wide range of directions surrounding the user wearing the augmented-reality system 1200. In some embodiments, an optimization process may be performed during manufacturing of augmented-reality system 1200 to determine relative positioning of each acoustic transducer 1220 in the microphone array.

In some examples, augmented-reality system 1200 may include or be connected to an external device (e.g., a paired device), such as neckband 1205. Neckband 1205 generally represents any type or form of paired device. Thus, the following discussion of neckband 1205 may also apply to various other paired devices, such as charging cases, smart watches, smart phones, wrist bands, other wearable devices, hand-held controllers, tablet computers, laptop computers, other external compute devices, etc.

As shown, neckband 1205 may be coupled to eyewear device 1202 via one or more connectors. The connectors may be wired or wireless and may include electrical and/or non-electrical (e.g., structural) components. In some cases, eyewear device 1202 and neckband 1205 may operate independently without any wired or wireless connection between them. While FIG. 12 illustrates the components of eyewear device 1202 and neckband 1205 in example locations on eyewear device 1202 and neckband 1205, the components may be located elsewhere and/or distributed differently on eyewear device 1202 and/or neckband 1205. In some embodiments, the components of eyewear device 1202 and neckband 1205 may be located on one or more additional peripheral devices paired with eyewear device 1202, neckband 1205, or some combination thereof.

Pairing external devices, such as neckband 1205, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 1200 may be provided by a paired device or shared between a paired device and an eyewear device, thus reducing the weight, heat profile, and form factor of the eyewear device overall while still retaining desired functionality. For example, neckband 1205 may allow components that would otherwise be included on an eyewear device to be included in neckband 1205 since users may tolerate a heavier weight load on their shoulders than they would tolerate on their heads. Neckband 1205 may also have a larger surface area over which to diffuse and disperse heat to the ambient environment. Thus, neckband 1205 may allow for greater battery and computation capacity than might otherwise have been possible on a stand-alone eyewear device. Since weight carried in neckband 1205 may be less invasive to a user than weight carried in eyewear device 1202, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 1205 may be communicatively coupled with eyewear device 1202 and/or to other devices. These other devices may provide certain functions (e.g., tracking, localizing, depth mapping, processing, storage, etc.) to augmented-reality system 1200. In the embodiment of FIG. 12, neckband 1205 may include two acoustic transducers (e.g., 1220(I) and 1220(J)) that are part of the microphone array (or potentially form their own microphone subarray). Neckband 1205 may also include a controller 1225 and a power source 1235.

Acoustic transducers 1220(I) and 1220(J) of neckband 1205 may be configured to detect sound and convert the detected sound into an electronic format (analog or digital). In the embodiment of FIG. 12, acoustic transducers 1220(I) and 1220(J) may be positioned on neckband 1205, thereby increasing the distance between the neckband acoustic transducers 1220(I) and 1220(J) and other acoustic transducers 1220 positioned on eyewear device 1202. In some cases, increasing the distance between acoustic transducers 1220 of the microphone array may improve the accuracy of beamforming performed via the microphone array. For example, if a sound is detected by acoustic transducers 1220(C) and 1220(D) and the distance between acoustic transducers 1220(C) and 1220(D) is greater than, e.g., the distance between acoustic transducers 1220(D) and 1220(E), the determined source location of the detected sound may be more accurate than if the sound had been detected by acoustic transducers 1220(D) and 1220(E).

Controller 1225 of neckband 1205 may process information generated by the sensors on neckband 1205 and/or augmented-reality system 1200. For example, controller 1225 may process information from the microphone array that describes sounds detected by the microphone array. For each detected sound, controller 1225 may perform a direction-of-arrival (DOA) estimation to estimate a direction from which the detected sound arrived at the microphone array. As the microphone array detects sounds, controller 1225 may populate an audio data set with the information. In embodiments in which augmented-reality system 1200 includes an inertial measurement unit, controller 1225 may compute all inertial and spatial calculations from the IMU located on eyewear device 1202. A connector may convey information between augmented-reality system 1200 and neckband 1205 and between augmented-reality system 1200 and controller 1225. The information may be in the form of optical data, electrical data, wireless data, or any other transmittable data form. Moving the processing of information generated by augmented-reality system 1200 to neckband 1205 may reduce weight and heat in eyewear device 1202, making it more comfortable to the user.

Power source 1235 in neckband 1205 may provide power to eyewear device 1202 and/or to neckband 1205. Power source 1235 may include, without limitation, lithium ion batteries, lithium-polymer batteries, primary lithium batteries, alkaline batteries, or any other form of power storage. In some cases, power source 1235 may be a wired power source. Including power source 1235 on neckband 1205 instead of on eyewear device 1202 may help better distribute the weight and heat generated by power source 1235.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 1300 in FIG. 13, that mostly or completely covers a user's field of view. Virtual-reality system 1300 may include a front rigid body 1302 and a band 1304 shaped to fit around a user's head. Virtual-reality system 1300 may also include output audio transducers 1306(A) and 1306(B). Furthermore, while not shown in FIG. 13, front rigid body 1302 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 1200 and/or virtual-reality system 1300 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 1200 and/or virtual-reality system 1300 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 1200 and/or virtual-reality system 1300 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50t5, i.e., values within the range 45 to 55.

While various features, elements or steps of particular embodiments may be disclosed using the transitional phrase "comprising," it is to be understood that alternative embodiments, including those that may be described using the transitional phrases "consisting" or "consisting essentially of," are implied. Thus, for example, implied alternative embodiments to a polymer thin film that comprises or includes polyethylene naphthalate include embodiments where a polymer thin film consists essentially of polyethylene naphthalate and embodiments where a polymer thin film consists of polyethylene naphthalate.

## Claims

1. A multilayer polymer thin film comprising:
a reflective polarizer (RP) comprising alternating first and second layers, wherein the first layers each comprise an isotropic polymer thin film having in-plane refractive indices nₓ(1) and n_{y}(1) and the second layers each comprise an anisotropic polymer thin film having in-plane refractive indices nₓ(2) and n_{y}(2); and
an anti-reflective coating (ARC) located directly over the reflective polarizer, the anti-reflective coating comprising alternating third and fourth layers, wherein the third layers each comprise an isotropic polymer thin film or an anisotropic polymer thin film having in-plane refractive indices nₓ(3) and n_{y}(3) and the fourth layers each comprise an isotropic polymer thin film having in-plane refractive indices nₓ(4) and n_{y}(4).

2. The multilayer polymer thin film of claim 1, having an average reflection of less than approximately 1% over a range of 400 nm to 700 nm along a pass direction, and an average reflection of at least approximately 90% over a range of 400 nm to 700 nm along a block direction.

3. The multilayer polymer thin film of claim 1 or 2, wherein nₓ(1) < 1.8, n_{y}(1) < 1.8, nₓ(1)-n_{y}(1) < 0.1, nₓ(2) > 1.8, and nₓ(2)-n_{y}(2) > 0.1;
preferably wherein nₓ(2) > 1.85 and nₓ(2)-n_{y}(2) > 0.2.

4. The multilayer polymer thin film of any preceding claim, wherein the second layers comprise a moiety selected from the group consisting of polyethylene naphthalate, polyethylene terephthalate, polybutylene naphthalate, polybutylene terephthalate, polyoxymethylene, and derivatives thereof.

5. The multilayer polymer thin film of any preceding claim, wherein:
nₓ(3) > 1.6, n_{y}(3) > 1.6, nₓ(3)-n_{y}(3) < 0.1, nₓ(4) < 1.6, n_{y}(4) < 1.6, and nₓ(4)-n_{y}(4) < 0.1; and/or
n_{y}(3) > 1.6, n_{y}(3) > n_{y}(1), nₓ(4) < 1.6, n_{y}(4) < 1.6, and nₓ(4)-n_{y}(4) < 0.1.

6. The multilayer polymer thin film of any preceding claim, comprising a sacrificial layer disposed directly over at least one of the reflective polarizer and the anti-reflective coating;
preferably wherein the sacrificial layer comprises a moiety having a surface energy of less than approximately 38 dyne/cm;
further preferably wherein the sacrificial layer comprises a moiety selected from the group consisting of polyethylene, polypropylene, and a fluorinated polymer.

7. A method comprising:
extruding alternating first and second polymer layers to form a reflective polarizer (RP) stack;
extruding alternating third and fourth polymer layers to form an anti-reflective coating directly overlying the reflective polarizer (RP) stack to form a multilayer polymer thin film comprising the reflective polarizer stack and the anti-reflective coating, wherein the reflective polarizer (RP) stack and the anti-reflective coating are extruded simultaneously; and
applying an in-plane stress to the multilayer polymer thin film.

8. The method of claim 7, comprising forming a sacrificial layer directly over at least one of the reflective polarizer stack and the anti-reflective coating.

9. The method of claim 7 or 8, further comprising co-extruding a sacrificial polymer layer directly over at least one of the reflective polarizer stack and the anti-reflective coating.

10. The method of any of claims 7 to 9, further comprising co-extruding a sacrificial polymer layer directly over the anti-reflective coating and applying the in-plane stress to the multilayer polymer thin film prior to removing the sacrificial layer.

11. The method of any of claims 7 to 10, wherein applying the in-plane stress comprises:
attaching a clip array to opposing edges of the multilayer polymer thin film, the clip array comprising a plurality of first clips slidably disposed on a first track located proximate to a first edge of the multilayer polymer thin film and a plurality of second clips slidably disposed on a second track located proximate to a second edge of the multilayer polymer thin film;
applying a positive in-plane strain to the multilayer polymer thin film along a transverse direction by increasing a distance between the first clips and the second clips; and
decreasing an inter-clip spacing amongst the first clips and amongst the second clips along a machine direction while applying the in-plane strain.

12. The method of any of claims 7 to 11, comprising heating the multilayer polymer thin film to a temperature greater than a glass transition temperature of at least one component of the multilayer polymer thin film while applying the in-plane stress.

13. The method of any of claims 7 to 12, comprising laminating the multilayer polymer thin film to a transparent substrate.

14. A multilayer polymer thin film comprising:
a reflective polarizer (RP) comprising alternating first and second layers, wherein the first layers each comprise an isotropic polymer thin film and the second layers each comprise an anisotropic polymer thin film; and
an anti-reflective coating (ARC) located directly over the reflective polarizer, the anti-reflective coating comprising alternating third and fourth layers, wherein the third layers each comprise an isotropic polymer thin film or an anisotropic polymer thin film and the fourth layers each comprise an isotropic polymer thin film, wherein an in-plane refractive index nₓ(1) of the first layers is less than an in-plane refractive index nₓ(2) of the second layers, and an in-plane refractive index nₓ(3) of the third layers is greater than an in-plane refractive index nₓ(4) of the fourth layers.

15. The multilayer polymer thin film of claim 14, comprising a sacrificial layer disposed directly over at least one of the reflective polarizer and the anti-reflective coating;
preferably wherein the sacrificial layer comprises a moiety selected from the group consisting of polytetrafluoroethylene, polyvinylidene fluoride, polydimethylsiloxane, polypropylene, polyethylene, ethylene-vinyl acetate, polyoxymethylene, polystyrene, polyvinyl alcohol, and derivatives thereof.
